# EUROPEAN PATENT APPLICATION

(11) **EP 3 916 587 A1**
(43) Date of publication of application: **01.12.2021**
(21) Application number: 21150499.8
(22) Date of filing: 07.01.2021
(51) Int. Cl.: G06F 16/9535, G06Q 30/06

(54) **METHOD AND APPARATUS FOR RECOMMENDING MULTIMEDIA RESOURCE, ELECTRONIC DEVICE AND STORAGE MEDIUM**

(30) Priority: 27.05.2020 CN 202010462953
(71) Applicant: BEIJING BAIDU NETCOM SCIENCE AND TECHNOLOGY CO. LTD., 100085 Beijing (CN)
(72) Inventor: CHEN, Chaoxing, Beijing, 100085 (CN); HUANG, Zhengjie, Beijing, 100085 (CN); FENG, Shikun, Beijing, 100085 (CN)
(74) Representative: Studio Torta S.p.A.

(57) **Abstract**

Embodiments of the disclosure disclose a method and apparatus for recommending multimedia resources, an electronic device and a storage medium. The present disclosure relates to a nature language processing technology. The technology solution can be implemented by generating (101) a relation graph based on first multimedia resources browsed by a plurality of user objects, taking (102) two nodes between which a number of nodes in a path of the relation graph is less than a number threshold as a training sample, training (103) a graph model to obtain a representative vector of each node in the training samples and recommending (104) multimedia resources based on vector similarities between the representative vectors of respective nodes of the plurality of user objects and/or the representative vectors of respective nodes of the first multimedia resources.

## Description

### FIELD

The present disclosure relates to computer technologies, and particularly to a nature language processing technology, and more particularly to a method and an apparatus for recommending multimedia resources, an electronic device and a storage medium.

### BACKGROUND

In the internet field, in order to facilitate acquisition or browsing of more multimedia resources by a user, the multimedia resources may be recommended to the user, for example an article, news may be recommended to the user. By recommending the multimedia resources to the user, the user may be guided to perform clicking on the resources. For example, if a user browses a piece of sports news, another piece of sports news may be recommended to the user to obtain a high click-through rate.

Thus, it is important to ensure an accuracy of recommendation, for example multimedia resources (such as article, video) recommendation in the internet.

### SUMMARY

The disclosure provides a method and an apparatus for recommending multimedia resources, an electronic device and a storage medium, which may improve an accuracy of recommendation.

Accordingly, embodiments of a first aspect of the present disclosure provide a method for recommending multimedia resources. The method includes: generating a relation graph based on first multimedia resources browsed by a plurality of user objects, in which a node in the relation graph corresponds to a user object or a first multimedia resource, and an edge in the relation graph indicates that a browsing behavior occurs between two nodes connected by the edge; taking two nodes between which a number of nodes in a path is less than a number threshold of the relation graph as a training sample; using training samples to train a graph model, in order to enable the graph model to obtain a representative vector of each node in the training samples, in which the representative vectors of two nodes belonging to a same training sample are similar; and recommending multimedia resources based on vector similarities between the representative vectors of respective nodes of the plurality of user objects and/or the representative vectors of respective nodes of the first multimedia resources.

With the method for recommending multimedia resources according to embodiments of the present disclosure, by generating a relation graph based on first multimedia resources browsed by a plurality of user objects, taking two nodes between which a number of nodes in a path of the relation graph is less than a number threshold as a training sample, training a graph model to obtain a representative vector of each node in the training samples and recommending multimedia resources based on vector similarities between the representative vectors of respective nodes of the plurality of user objects and/or the representative vectors of respective nodes of the first multimedia resources, the nearby nodes in the same path of the relation graph are used as the training samples in the training of the graph model, such that the representative vector obtained by the graph model may indicate an interior relation of resources browsed by the same user, thus improving an accuracy of the representative vector of the node, and thereby improving an accuracy of resource recommendation based on the representative vectors.

In some embodiments, taking two nodes between which the number of nodes is less than the number threshold in a path of the relation graph as the training sample comprises: for each path of the relation graph, moving a sliding window in the path with a fixed step size, wherein a length of the sliding window corresponds to the number threshold; obtaining nodes within the sliding window once the sliding window moves by one fixed step size; and combining a node in the center of the sliding window with remaining nodes within the sliding window, respectively, and taking each combination as one training sample.

In some embodiments, using the training samples to train the graph model, in order to enable the graph model to obtain the representative vector of each node in the training samples comprises: determining a first sub-cluster running the graph model from a server cluster; generating a prediction task and a parameter adjustment task based on the training samples; allocating the prediction task to be performed by the first sub-cluster, wherein the prediction task is configured to predict the representative vectors of two nodes in the training samples by using the graph model, to obtain a probability that the two nodes belong to a same training sample and obtain a probability gradient based on the predicted representative vectors; and allocating the parameter adjustment task to be performed by a second sub-cluster other than the first sub-cluster in the server cluster, wherein the parameter adjustment task is configured to adjust a model parameter of the graph model based on the probability gradient generated by the prediction task.

In some embodiments, graph model comprises a feature function and an aggregate function, wherein the prediction task is performed by operations: querying the relation graph based on the training samples to obtain a plurality of neighbor nodes of each node in the training samples; generating a feature vector of each neighbor node based on the feature function; aggregating the feature vectors of the plurality of neighbor nodes using the aggregate function to obtain the representative vector of each node; and determining the probability that two nodes in the training samples belong to the same training sample based on the vector similarity between the representative vectors of the two nodes.

In some embodiments, the model parameter comprises a parameter in the aggregate function and a parameter in the feature function.

In some embodiments, querying the relation graph based on the training samples to obtain a plurality of neighbor nodes of each node in the training samples comprises: for each node in the training samples, querying the relation graph and randomly selecting a fixed number of neighbor nodes.

In some embodiments, the method further comprises: determining the plurality of user objects each conducting a browsing behavior monitored within a statistical time period and the first multimedia resources browsed by the plurality of user objects based on browsing behaviors monitored within the statistical time period.

In some embodiments, recommending multimedia resources based on vector similarities between the representative vectors of respective nodes of the plurality of user objects and/or the representative vectors of respective nodes of the first multimedia resources comprises: obtaining a target representative vector of a target multimedia resource browsed by a target user object; determining a second multimedia resource from the first multimedia resources based on the target representative vector, wherein a vector similarity between a representative vector of the second multimedia resource and the target representative vector is higher than a similarity threshold; and recommending the second multimedia resource to the target user object.

In some embodiments, recommending multimedia resources based on vector similarities between the representative vectors of respective nodes of the plurality of user objects and/or the representative vectors of respective nodes of the first multimedia resources comprises: obtaining a representative vector of a target user object; determining a second multimedia resource from the first multimedia resources based on the representative vector of the target user object, wherein, a vector similarity between a representative vector of the second multimedia resource and the representative vector of the target user object is higher than a similarity threshold; and recommending the second multimedia resource to the target user object.

In some embodiments, recommending multimedia resources based on vector similarities between the representative vectors of respective nodes of the plurality of user objects and/or the representative vectors of respective nodes of the first multimedia resources comprises: obtaining a representative vector of a target user object; determining a candidate user object from the plurality of user objects based on the representative vector of the target user object, wherein a vector similarity between a representative vector of the candidate user object and the representative vector of the target user object is higher than a similarity threshold; and recommending a multimedia resource browsed by the candidate user object to the target user object.

Embodiments of a second aspect of the present disclosure provide an apparatus for recommending multimedia resources, including a generating module, a first determining module, a training module, and a recommending module. The generating module is configured to generate a relation graph based on first multimedia resources browsed by a plurality of user objects. A node in the relation graph corresponds to a user object or a first multimedia resource, and an edge in the relation graph indicates that a browsing behavior occurs between two nodes connected by the edge. The first determining module is configured to take two nodes between which a number of nodes in a path of the relation graph is less than a number threshold as a training sample. The training module is configured to use training samples to train a graph model, in order to enable the graph model to obtain a representative vector of each node in the training samples. The representative vectors of two nodes belonging to a same training sample are similar. The recommending module is configured to recommend multimedia resources based on vector similarities between the representative vectors of respective nodes of the plurality of user objects and/or the representative vectors of respective nodes of the first multimedia resources.

With the apparatus for recommending multimedia resources according to embodiments of the present disclosure, by generating a relation graph based on first multimedia resources browsed by a plurality of user objects, taking two nodes between which a number of nodes in a path of the relation graph is less than a number threshold as a training sample, training a graph model to obtain a representative vector of each node in the training samples and recommending multimedia resources based on vector similarities between the representative vectors of respective nodes of the plurality of user objects and/or the representative vectors of respective nodes of the first multimedia resources, the nearby nodes in the same path of the relation graph are used as the training samples in the training of the graph model, such that the representative vector obtained by the graph model may indicate an interior relation of resources browsed by the same user, thus improving an accuracy of the representative vector of the node, and thereby improving an accuracy of resource recommendation based on the representative vectors.

In some embodiments, the first determining module comprises: a moving unit, configured to move a sliding window in each path of the relation graph with a fixed step size, wherein a length of the sliding window corresponds to the number threshold; an obtaining unit, configured to obtain nodes within the sliding window once the sliding window moves by one fixed step size; a combining unit, configured to combine a node in the center of the sliding window with remaining nodes within the sliding window, respectively, and to take each combination as one training sample.

In some embodiments, the training module comprises: a first determining unit, configured to determine a first sub-cluster running the graph model from a server cluster; a generating unit, configured to generate a prediction task and a parameter adjustment task based on the training samples; an allocating unit, configured to: allocate the prediction task to be performed by the first sub-cluster, wherein the prediction task is configured to predict the representative vectors of two nodes in the training samples by using the graph model, to obtain a probability that the two nodes belong to a same training sample and obtain a probability gradient based on the predicted representative vectors; and allocate the parameter adjustment task to be performed by a second sub-cluster other than the first sub-cluster in the server cluster, wherein the parameter tuning task is configured to adjust a model parameter of the graph model based on the probability gradient generated by the prediction task.

In some embodiments, the graph model comprises a feature function and an aggregate function, and wherein the allocating unit comprises: a querying sub unit, configured to query the relation graph based on the training samples to obtain a plurality of neighbor nodes of each node in the training samples; a generating sub unit, configured to generate a feature vector of each neighbor node based on the feature function; an aggregating sub unit, configured to aggregate the feature vectors of the plurality of neighbor nodes using the aggregate function to obtain the representative vector of each node; and a determining sub unit, configured to determine the probability that two nodes in the training samples belong to the same training sample based on the vector similarity between the representative vectors of the two nodes.

In some embodiments, the model parameter comprises a parameter in the aggregate function and a parameter in the feature function.

In some embodiments, the querying sub unit is configured to: for each node in the training samples, query the relation graph and randomly select a fixed number of neighbor nodes.

In some embodiments, the apparatus further comprises: a second determining module, configured to determine the plurality of user objects each conducting a browsing behavior monitored within a statistical time period and the first multimedia resources browsed by the plurality of user objects based on browsing behaviors monitored within the statistical time period.

In some embodiments, the recommending module comprises: a first querying unit, configured to query a target representative vector of a target multimedia resource browsed by a target user object; a second determining unit, configured to determine a second multimedia resource from the first multimedia resources based on the target representative vector, wherein a vector similarity between a representative vector of the second multimedia resource and the target representative vector is higher than a similarity threshold; a first recommending unit, configured to recommend the second multimedia resource to the target user object.

In some embodiments, the recommending module comprises: a second querying unit, configured to query a representative vector of a target user object; a third determining unit, configured to determine a second multimedia resource from the first multimedia resources based on the representative vector of the target user object, wherein, a vector similarity between a representative vector of the second multimedia resource and the representative vector of the target user object is higher than a similarity threshold; a second recommending unit, configured to recommend the second multimedia resource to the target user object.

In some embodiments, the recommending module comprises: a second querying unit, configured to query a representative vector of a target user object; a fourth determining unit, configured to determine a candidate user object from the plurality of user objects based on the representative vector of the target user object, wherein a vector similarity between a representative vector of the candidate user object and the representative vector of the target user object is higher than a similarity threshold; a third recommending unit, configured to recommend a multimedia resource browsed by the candidate user object to the target user object.

Embodiments of a third aspect of the present disclosure provide an electronic device. The electronic device includes at least one processor and a memory. The memory is configured to store instructions executable by the at least one processor. When the instructions are executed by the at least one processor, the at least one processor is caused to implement the method for recommending multimedia resources as described in the embodiments of the first aspect.

Embodiments of a fourth aspect of the present disclosure provide a non-transitory computer-readable storage medium including instructions that, when executed by a computer, cause the computer to implement the method for recommending multimedia resources as described in the embodiments of the first aspect.

Embodiments of a fifth aspect of the present disclosure provide a computer program product storing computer programs that, when executed by a computer, cause the computer to implement the method for recommending multimedia resources as described in the embodiments of the first aspect.

According to the embodiments of the present disclosure, in the training of the graph model, the nearby nodes in the same path of the relation graph are used as the training samples, such that the representative vector obtained by the graph model may indicate an interior relation of resources browsed by the same user, thus improving an accuracy of the representative vector of the node, and thereby improving an accuracy of resource recommendation based on the representative vectors.

Additional aspects and advantages of embodiments of present disclosure will be given in part in the following descriptions, become apparent in part from the following descriptions, or be learned from the practice of the embodiments of the present disclosure.

### BRIEF DESCRIPTION OF THE DRAWINGS

The accompanying drawings in the following descriptions are merely some embodiments of the present disclosure, and shall not be construed to limit the present disclosure.
FIG. 1 is a flow chart illustrating a method for recommending multimedia resources according to an exemplary embodiment.
FIG. 2 is a schematic diagram illustrating a relation graph according to an exemplary embodiment.
FIG. 3 is a flow chart illustrating a method for recommending multimedia resources according to another exemplary embodiment.
FIG. 4 is a flow chart illustrating a method for recommending multimedia resources according to another exemplary embodiment.
FIG. 5 is a schematic diagram illustrating a training process according to an exemplary embodiment.
FIG. 6 is a flow chart illustrating a method for recommending multimedia resources according to another exemplary embodiment.
FIG. 7 is a flow chart illustrating a method for recommending multimedia resources according to another exemplary embodiment.
FIG. 8 is a block diagram illustrating an apparatus for recommending multimedia resources according to another exemplary embodiment.
FIG. 9 is a block diagram illustrating an electronic device adapted to implement a method for recommending multimedia resources according to an exemplary embodiment.

### DETAILED DESCRIPTION

In order to make the technical solution of the present disclosure better understood, the technical solution in embodiments of the present disclosure will be clearly and completely described below with reference to the accompanying drawings. Obviously, the described embodiments are merely part of rather than all of the embodiments of the present disclosure. All other embodiments obtained by persons of ordinary skill in the art based on the embodiments of the present disclosure shall fall within the protection scope of the present disclosure. For the purpose of clarity and conciseness, well-known functions and structures are not described in detail.

A method and an apparatus for recommending multimedia resources, an electronic device and a storage medium according to embodiments of the present disclosure will be described with reference to the drawings in the embodiments.

With the method for recommending multimedia resources according to embodiments of the present disclosure, in the training of the graph model, the nearby nodes in the same path of the relation graph are used as the training samples, such that the representative vector obtained by the graph model may indicate an interior relation of resources browsed by the same user, thus improving accuracy of the representative vector of the node, and thereby improving an accuracy of resource recommendation based on the representative vectors.

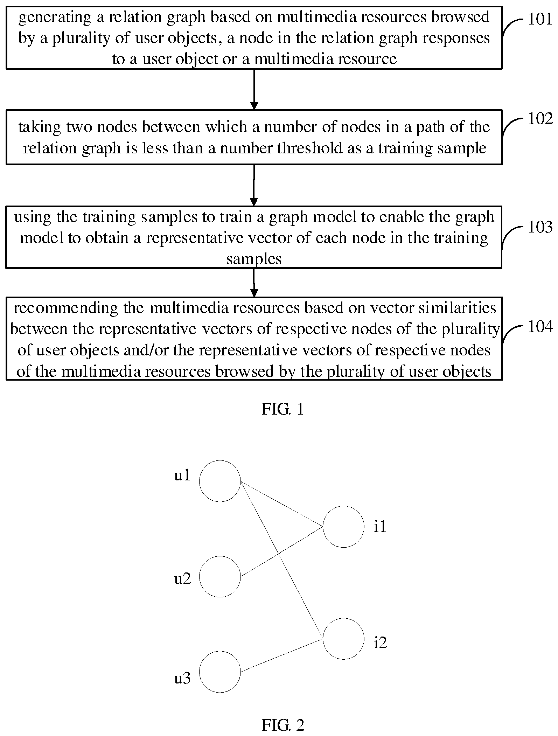

FIG. 1 is a flow chart illustrating a method for recommending multimedia resources according to an exemplary embodiment.

The method can be performed by an apparatus for recommending multimedia resources provided by the embodiments of the present disclosure. The apparatus can be disposed in an electronic device, so as to improve an accuracy of representative vector of the node in a relation graph, thus improve an accuracy of recommendation.

As illustrated in FIG. 1, the method for recommending multimedia resources includes the followings.

In block 101, a relation graph is generated based on multimedia resources browsed by a plurality of user objects. A node in the relation graph responses to a user object or a multimedia resource.

In the present disclosure, a browsing record of browsing the multimedia resources by the plurality of user objects is obtained to determine the multimedia resources browsed by each user object. A user object is used as a node, and a multimedia resource is used as a node. If a browsing behavior occurs between the user object and the multimedia resource, then the nodes corresponding respectively to the user object and the multimedia resource are connected by an edge, such that a relation graph can be generated.

In other words, a node in the relation graph corresponds to a user object or a multimedia resource, and an edge in the relation graph indicates that a browsing behavior occurs between the two nodes connected by the edge.

In the present disclosure, the multimedia resource may include an article, a video, a music or the like.

FIG. 2 is a schematic diagram illustrating a relation graph according to an exemplary embodiment. Assuming that a user u1 browses an article i1 and an article i2, a user u2 browses the article i2 and a user u3 browses the article i2, the relation graph as illustrated in FIG. 2 can be generated. In FIG. 2, a circle represents a node, u1, u2 and u3 represent users, i1 and i2 represent articles. An edge between two nodes represents that a browsing behavior occurs between a user and an article.

In block 102, two nodes between which a number of nodes in a path of the relation graph is less than a number threshold are taken as a training sample.

In the present disclosure, there is a relation between the nodes on the path of the relation graph. The path of the relation graph is composed of nodes which may be reachable starting from a node. As illustrated in FIG. 2, u1-i1-u2 is configured as a path, and u1-i2-u3 is configured as another path.

It should be noted that, one node can be located on more than one path.

In the present disclosure, two nodes between which the number of nodes in a path is less than the number threshold can be configured as a training sample. In other words, one training sample includes two nodes. The number threshold is set according to actual needs. In order to improve an accuracy of the graph model, the number threshold is typically not too big.

For example, assuming that the number threshold is 2, the two nodes which are directly adjacent to each other in a path can be used as a training node, and the two nodes between which there is one node in the path can be used as a training sample.

Taking the path u1-i1-u2 in FIG. 2 as an example, if the number threshold is 2, the two nodes u1 and i1 which are directly adjacent to each other can be used as a training sample, the two nodes i1 and u2 which are directly adjacent to each other can be used as a training sample, and the two nodes u1 and u2 which are separated by one node can be used as the training sample.

The more the number of nodes between two nodes in the path, the smaller the relational degree between the two nodes. In the present disclosure, the number threshold is set to ensure between that two nodes in the training sample have a big relational degree. In this way, a situation that two nodes which are separated by a big number of nodes in the path and have a small relational degree are selected as the training sample when there are many nodes in the path can be avoided, thus preventing from affecting an accuracy of the graph model.

In block 103, the training samples are used to train a graph model to enable the graph model to obtain a representative vector of each node in the training samples.

In the present disclosure, a plurality of training samples are used to train the graph model, such that the graph model can obtain the representative vector of each node in the training samples. In detail, for each training sample, information of two nodes in the training sample is inputted into the graph model, and the representative vector of each node can be outputted from the graph model. In this way, the representative vectors of respective nodes of the plurality of user objects and the representative vector of respective nodes of the multimedia resources can be obtained through the graph model.

The representative vector of the node can be derived by the graph model from information of the node.

For a user object, information of the user object, such as a gender, an age, a hobby or other information of the user object, can be inputted into the graph model. For a multimedia resource, a title, an author or other information of the multimedia resource can be inputted into the graph model.

Since two nodes in the training sample are located on the same path and the number of nodes between the two nodes is less than the number threshold, it indicates that the relational degree between the two nodes is big, the representative vectors of the two nodes belonging to the same training sample obtained by the graph model are similar.

In block 104, the multimedia resources are recommended based on vector similarities between the representative vectors of respective nodes of the plurality of user objects and/or the representative vectors of respective nodes of the multimedia resources browsed by the plurality of user objects.

In the present disclosure, the more similar the representative vectors of two nodes, the bigger the relational degree between the two nodes. The multimedia resources recommendation can be performed based on the vector similarities between the representative vectors of respective nodes of the plurality of user objects. For example, when the vector similarity between the representative vectors of respective nodes of two user objects is greater than a similarity threshold, the multimedia resources browsed by the two user objects are recommended to each other.

Alternatively, the multimedia resources recommendation can be performed based on the vector similarities between the representative vectors of respective nodes of the plurality of multimedia resources. For example, when the vector similarity between the representative vectors of respective nodes of two multimedia resources is greater than a similarity threshold, if a user have browsed one of the two multimedia resources, then the other of the multimedia resources can be recommended to the user.

Alternatively, the multimedia resources recommendation can be performed based on the vector similarities between the representative vectors of respective nodes of the plurality of user objects and the representative vectors of respective nodes of the plurality of multimedia resources. For example, when the vector similarity between the representative vectors of a node of a user object and a node of a multimedia resource is greater than a similarity threshold, the multimedia resource can be recommended to the user object.

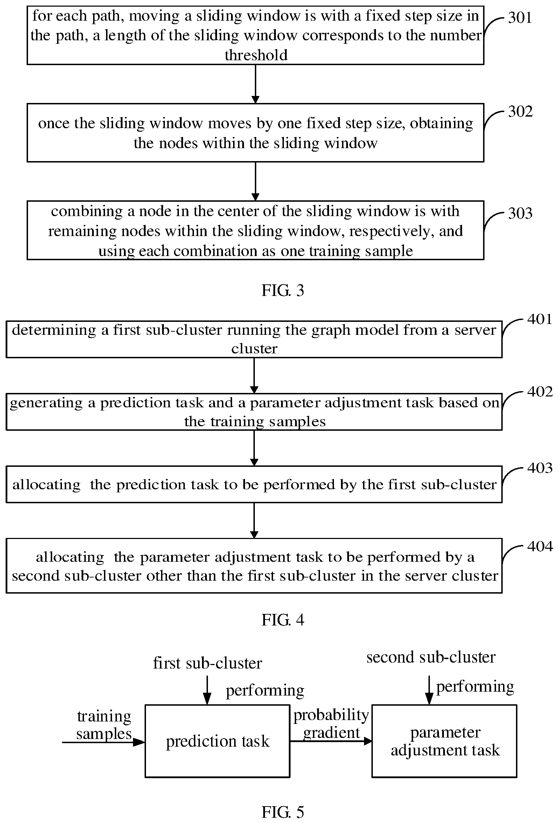

In one embodiment of the present disclosure, when determining the training sample, a sliding window can be used to obtain the training sample, which will be described with reference to FIG. 3 below. FIG. 3 is a flow chart illustrating a method for recommending multimedia resources according to another exemplary embodiment.

As illustrated in FIG. 3, the two nodes between which a number of nodes in a path of the relation graph is less than a number threshold are taken as a training sample as follows.

In block 301, for each path, a sliding window is moved with a fixed step size in the path. A length of the sliding window corresponds to the number threshold.

In the present disclosure, in each path of the relation graph, the sliding window with a certain length can be moved with the fixed step size in the path.

In order to ensure a big relational degree between two nodes in the training sample, the length of the sliding window corresponds to the number threshold. For example, if the number threshold is 2, the length of the sliding window can be 5. The step size of the sliding window may be smaller than the length of the sliding window.

In block 302, once the sliding window moves by one fixed step size, the nodes within the sliding window are obtained.

In the present disclosure, once the sliding window moves by one step size in a moving direction on a path, the nodes within the sliding window are obtained. The moving direction may refer to a direction away from a moving start position.

For example, in a path p1-p2-p3-p4, the sliding window may move in a direction away from the node p1.

In block 303, a node in the center of the sliding window is combined with remaining nodes within the sliding window, respectively, and each combination is used as one training sample.

For example, assuming that at initial time, the nodes within the sliding window from the left to the right may be p1, p2, p3, p4, p5, the center node in the center of the sliding window is p3, then p3 may be combined with p1, p2, p4, and p5, respectively, to obtain four combinations (p1, p3), (p2, p3), (p3, p4) and (p3, p5). Each combination can be used as one training sample, such that four training samples can be obtained.

After the sliding window moves by one node, the nodes within the sliding window from the left to the right may be p2, p3, p4, p5, p6, the center node in the center of the sliding window is p4, then p4 may be combined with p2, p4, p5 and p6, respectively, to obtain four combinations (p2, p4), (p3, p4), (p4, p5) and (p4, p6). Each combination can be used as one training sample, such that four training samples can be obtained.

In the present disclosure, when taking two nodes between which the number of nodes in a path of the relation graph is less than the number threshold as the training sample based on the path of the relation graph, by moving the sliding window corresponding to the number threshold in each path, obtaining the nodes within the sliding window, combining the center node in the sliding window with other nodes in the sliding window respectively and taking each combination as one training sample, a plurality of training samples can be obtained simply and each two nodes in the training samples have a big relational degree. By using the training samples obtained in this way to train the graph model, an accuracy of the graph model can be improved.

In an actual application, with the increasing of the number of user objects and the multimedia resources, the single-machine based training method may be constrained. In order to achieve the recommendation for a large amount of users, in an embodiment of the present disclosure, the training may be performed in a distributed manner based on multiple machines, which may be described with reference to FIG. 4 and FIG. 5 below. FIG. 4 is a flow chart illustrating a method for recommending multimedia resources according to another exemplary embodiment. FIG. 5 is a schematic diagram illustrating a training process according to an exemplary embodiment.

As illustrated in FIG. 4, using the training samples to train the graph model in order to enable the graph model to obtain the representative vector of each node in the training samples can be implemented as follows.

In block 401, a first sub-cluster running the graph model is determined from a server cluster.

In the present disclosure, the number of servers or virtual machines for running the graph model in the server cluster can be determined based on the number of user objects and the number of multimedia resources, and then the servers or virtual machines for running the graph model may be configured as the first sub-cluster.

Alternatively, one half of servers or virtual machines in the server cluster may be configured as the first sub-cluster for running the graph model.

In block 402, a prediction task and a parameter adjustment task are generated based on the training samples.

Since the graph model is trained, two kinds of tasks can be generated according to the training samples, one is the prediction task and the other one is the parameter adjustment task.

In block 403, the prediction task is allocated to be performed by the first sub-cluster.

In the present disclosure, the first sub-cluster is running the graph model, such that the first sub-cluster in the server cluster is configured to perform the prediction task.

In detail, each server of visual machine in the first sub-cluster reads the information of two nodes in the training samples, predicts the representative vectors of the two nodes in the training samples by using the graph model, and obtains a probability that the two nodes belong to a same training sample and obtains a probability gradient based on the predicted representative vectors.

The representative vector of a node can be derived by the graph model from information of the node.

If the two nodes inputted into the graph model belong to the same training sample, tags of the two nodes may indicate that the two nodes belong to the same training sample. The smaller the probability obtained based on the predicted representative vectors, the less accurate the graph model, then the obtained probability gradient is used to adjust a parameter of the graph model.

In block 404, the parameter adjustment task is allocated to be performed by a second sub-cluster other than the first sub-cluster in the server cluster.

In the present disclosure, the first sub-cluster in the server cluster is running the graph model, so as to perform the prediction task. The second sub-cluster other than the first sub-cluster in the server cluster can be configured to perform the corresponding parameter adjustment task. In other words, the servers or visual machines in the second sub-cluster perform the task of adjusting the parameter of the graph model.

The parameter adjustment task refers to a task of adjusting the parameter(s) of the graph model based on the above probability gradient, such that the servers or virtual machines in the first sub-cluster can predict the representative vectors of two nodes in the training samples based on the adjusted parameter(s) of the graph model, to obtain a probability that the two nodes belong a same training sample and a probability gradient.

As illustrated in FIG. 5, the machines in the server cluster may be grouped into two group, some machines belong to the first sub-cluster, and other machines belong to the second sub-cluster. The machines in the first sub-cluster perform the prediction task and the machines in the second sub-cluster perform the parameter adjustment task.

In detail, the first sub-cluster performs the prediction task to predict the training samples, obtains the probability gradient based on the predicted representative vectors of two nodes in the training samples and then transmits the probability gradient to the parameter adjustment task. The second sub-cluster performs the parameter adjustment task to adjust the parameter(s) of the graph model based on the probability gradient, so as to obtain a new parameter or new parameters. Then the first sub-cluster performs the prediction task based on the new parameter(s), and transmits the probability gradient to the parameter adjustment task. The second sub-cluster continues to perform the parameter adjustment task to obtain the new parameter(s), until a training end condition is met.

In an actual application, when the number of the user objects and the multimedia resources is increased, a scale of the server cluster is expanded, such that a training degree may be improved.

In the present disclosure, when using the training samples to train the graph model to enable the graph model to obtain the representative vector of each node in the training samples, by configuring two clusters in the server cluster to respectively perform the prediction task and the parameter adjustment task, not only the training degree can be improved, but also training and prediction of a large amount of user objects and multimedia resources can be supported. Further, the machines can be supplemented according to the number of user objects needed to be trained, thus having a high expandability.

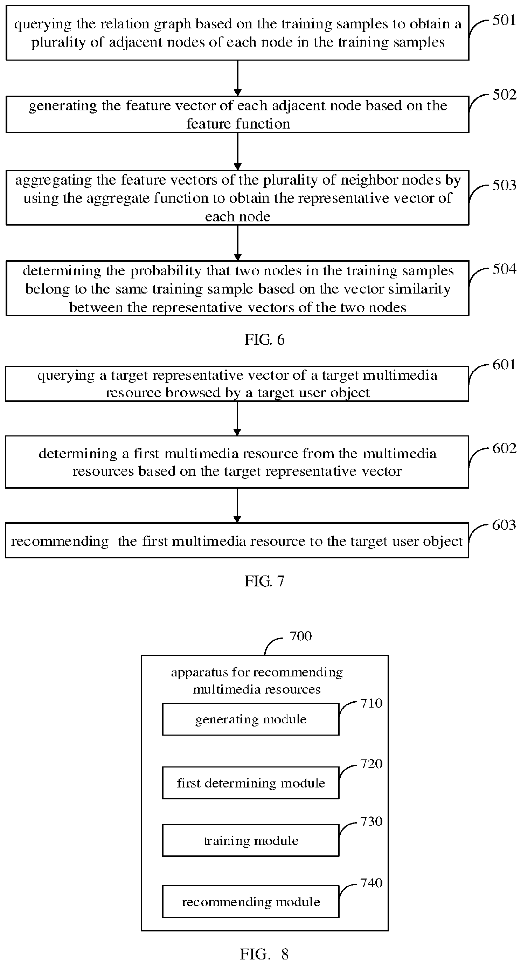

In order to improve an accuracy of the representative vector, in an embodiment of the present disclosure, feature vectors of adjacent nodes of a node can be used to obtain the representative vector of the node, such that the browsing behaviors of the user objects can be made full use of, which will be described with reference to FIG. 6 below. FIG. 6 is a flow chart illustrating a method for recommending multimedia resources according to another exemplary embodiment.

As illustrated in FIG. 6, the prediction task can be performed as follows.

In block 501, the relation graph is queried based on the training samples to obtain a plurality of adjacent nodes of each node in the training samples.

In the present disclosure, the graph model includes a feature function and an aggregate function. The feature function is configured to determine the feature vector of the node. The aggregate function is configured to aggregate the feature vectors of a plurality of nodes to obtain the representative vector. The parameter of the graph model includes a parameter of the aggregate function and a parameter of the feature function.

When performing the prediction task, the relation graph is queried to obtain the plurality of adjacent nodes of each node in the training samples based on the nodes in the training samples and the edges of the relation graph. The adjacent nodes of a node may include directly adjacent nodes (which may be referred to as one-hop adjacent nodes) of the node in the training samples, may further include adjacent nodes (which may be referred to as two-hops adjacent nodes) of the directly adjacent nodes, and may even include three-hops adjacent nodes. Therefore, when determining the adjacent nodes, the adjacent nodes can be obtained based on a preset hop count.

As illustrated in FIG. 2, the adjacent nodes of node u1 include node i1 and node u2. It can be see that the node i1 is the directly adjacent node of the node u1 and the node u2 is the directly adjacent node of the node i1.

Alternatively, for each node in the training samples, the relation graph may be queried and a fixed number of adjacent nodes can be randomly selected. For example, three adjacent nodes can be randomly selected. For two nodes in the training samples, the fixed number of adjacent nodes can be obtained, so as to avoid a situation that one node has more adjacent nodes while the other node has less adjacent nodes, which may affect the accuracy of the probability.

In block 502, the feature vector of each adjacent node is generated based on the feature function.

In the present disclosure, the feature vector of each adjacent node is generated based on the adjacent node and the feature function.

In block 503, the feature vectors of the plurality of neighbor nodes are aggregated by using the aggregate function to obtain the representative vector of each node.

In the present disclosure, after obtaining the feature vector of each adjacent node, the feature vectors of the adjacent nodes are aggregated by using the aggregate function to obtain the representative vector of the corresponding node in the training samples.

For example, for two nodes in a training sample, node A and node B, the feature vectors of all the adjacent nodes of the node A are aggregated by using the aggregate function to obtain the representative vector of the node A, and the feature vectors of all the adjacent nodes of the node B are aggregated by using the aggregate function to obtain the representative vector of the node B.

In other words, the representative vector of the node obtained by aggregating the feature vectors of the adjacent nodes may be used as the representative vector of the node in the training sample, such that the representative vector of the node in the training sample integrates the features of the adjacent nodes.

In block 504, the probability that two nodes in the training samples belong to the same training sample is determined based on the vector similarity between the representative vectors of the two nodes.

After obtaining the representative vectors of two nodes in the training samples, the vector similarity between the representative vectors of the two nodes can be calculated. In detail, a cosine of the representative vectors can be calculated. The higher the vector similarity of two nodes, the bigger the probability that the two nodes belong to the same training sample. The lower the vector similarity of two nodes, the smaller the probability that the two nodes belong to the same training sample.

In detail, a mapping relationship may be established between the vector similarity and the probability. Based on the mapping relationship, the probability corresponding to the vector similarity between the representative vectors of two nodes in the training samples can be determined, and the probability can be used as the probability that the two nodes in the training samples belong to the same training sample.

In the present disclosure, the model parameters may include the parameter(s) in the aggregate function and the parameter(s) in the feature function. When the parameter adjustment task is performed, the parameter(s) in the feature function may be adjusted based on the probability gradient to improve an accuracy of the feature vector of the node, and the parameter(s) in the aggregate function may be adjusted based on the probability gradient to improve an accuracy of the representative vector obtained by aggregating, such that the accuracy of the graph model can be improved.

In the present disclosure, the graph model includes the feature function and the aggregate function. When performing the prediction task, the feature vector of each adjacent node of each node in the training samples may be generated by the feature function, and the representative vector of the corresponding node in the training samples can be obtained by aggregating the feature vectors of all the adjacent nodes. The probability that two nodes belong to the same training sample can be determined based on the vector similarity between the representative vectors of the two nodes in the training samples. Thus, the representative vector of a node obtained by aggregating the feature vectors of the adjacent nodes of the node in the training samples with the aggregate function may be used as the representative vector of the node, such that the representative vector of the node in the training sample integrates the features of the adjacent nodes, and the multimedia resources browsed by the same user may be captured. By obtaining the probability that the two nodes belong to the same training sample based on the representative vectors of the two nodes, an accuracy of the probability is improved, thus improving a rate of convergence of the model.

In the actual application, the multimedia resources browsed by the user may vary. Thus, in order to improve an instantaneity of the recommendation, in an embodiment of the present disclosure, before generating the relation graph based on the multimedia resources browed by the plurality of user objects, the browsing behaviors monitored within a latest time period may be determined, and the plurality of user objects conducting the browsing behaviors and the multimedia resources browsed by the user objects can be determined based on the browsing behaviors monitored within the latest time period.

The time period may be set according actual needs, which may be per one hour, or per two hours. For example, based on the browsing behaviors within the latest one hour, the user objects conducting the browsing behaviors and the multimedia resources browsed by the user objects can be determined.

In an example, assuming that the multimedia resource is an article, interactive clicking data between a user and the article and clicking data within one hour are obtained from an online log, so as to determine users that have browsed the article and articles browsed by the user.

After determining the plurality of user objects conducting the browsing behaviors and the multimedia resources browsed by the user objects, the relation graph may be generated based on the plurality of user objects, the multimedia resources browsed by the user objects and the browsing behaviors occurring between the plurality of user objects and the multimedia resources.

In the present disclosure, before generating the relation graph based on the multimedia resources browsed by the plurality of user objects, the plurality of user objects conducting the browsing behaviors and the multimedia resources browsed by the plurality of user objects may be determined based on the browsing behaviors monitored within a latest time period. By generating the relation graph with a high instantaneity may be generated based on the browsing behaviors monitored within the latest time period and training the relation graph, the representative vector obtained by the graph model may indicate an interior relationship of the resources browsed by the same user within a shorter time, thus improving an instantaneity and an accuracy of the representative vector, and further improving an instantaneity and an accuracy of recommendation.

In order to recommend the multimedia resources, in an embodiment of the present disclosure, the multimedia resources may be recommended based on the representative vector of each multimedia resource in the relation graph, which will be described with reference to FIG. 6 below. FIG. 7 is a flow chart illustrating a method for recommending multimedia resources according to another exemplary embodiment.

As illustrated in FIG. 7, the multimedia resources are recommended based on vector similarities between the representative vectors of respective nodes of the plurality of user objects and/or the representative vectors of respective nodes of the first multimedia resources as follows.

In block 601, a target representative vector of a target multimedia resource browsed by a target user object is queried.

In the present disclosure, the representative vector of each user object and the representative vector of each multimedia resource may be obtained by the trained graph model and stored. When the recommendation is performed for a user object (which may be referred to as "target user object" for ease of description) in the relation graph, a multimedia resource already browsed by the target user objet are determined, and the target representative vector of the already browsed multimedia resource is queried.

In block 602, a first multimedia resource can be determined from the multimedia resources based on the target representative vector. A vector similarity between representative vector of the first multimedia resource and the target representative vector is higher than a similarity threshold.

After determining the target representative vectors of the already browsed multimedia resources, the vector similarity between the representative vector of each already browsed multimedia resource and the representative vector of a multimedia resource in the plurality of multimedia resource can be calculated, and the multimedia resource having the vector similarity higher than the similarity threshold is configured as the first multimedia resource. There may be one first multimedia resource or multiple first multimedia resources.

The vector similarity between two representative vectors may be derived by calculating the cosine of the two representative vectors.

In block 603, the first multimedia resource is recommended to the target user object.

In the present disclosure, when the target user object would like to browse multimedia resource, the first multimedia resource is recommended to the target user object. For example when the user uses a music player, the first multimedia resource (such as, songs) can be recommended to the user in a preset area of the display interface.

For example, if the user has browsed a piece of sports news, an article having a higher similarity with the representative vector of the sports news can be recommended to the user.

In the present disclosure, by determining the multimedia resource whose representative vector has the vector similarity with the target representative vector higher than the similarity threshold based on the target representative vector of the multimedia resource already browsed by the target user object and recommending the multimedia resource to the target user object, the multimedia resources recommendation based on the vector similarities between the representative vectors of the already browsed multimedia resource and other multimedia resources can be realized.

In the above description, the recommendation is performed based on the similarities between the representative vectors of the multimedia resources. In an embodiment of the present disclosure, the multimedia resources can be recommended based on the representative vector of the user object and the representative vector of the multimedia resource.

In detail, the representative vector of each user object and the representative vector of each multimedia resource can be obtained by the trained graph model and stored. When performing the recommendation for a user object (i.e., the target user object) in the relation graph, the representative vector of the target user object is obtained based on an identification of the target user object.

After obtaining the representative vector of the target user object, the vector similarity between the representative vector of the target user object and the representative vector of each multimedia resource is calculated, and the multimedia resource having the vector similarity higher than the similarity threshold is configured as a second multimedia resource. The second multimedia resource is recommended to the target user object. There may be one second multimedia resource, or a plurality of second multimedia resources.

In the present disclosure, by recommending the multimedia resource having the vector similarity with the target representative vector of the target user object higher than the similarity threshold to the target user object based on the target representative vector of the target user object, the multimedia resources recommendation based on the vector similarities between the representative vector of the user object and the representative vectors of multimedia resources can be realized.

In an embodiment of the present disclosure, the multimedia resources can be recommended based on the representative vectors of user objects.

In detail, the representative vector of each user object and the representative vector of each multimedia resource can be obtained by the trained graph model and stored. When performing the recommendation for a user object (i.e., the target user object) in the relation graph, the representative vector of the target user object is obtained based on an identification of the target user object.

After obtaining the representative vector of the target user object, the vector similarities between the representative vector of the target user object and the representative vectors of other user objects are calculated, and the user object having the vector similarity higher than the similarity threshold is configured as a candidate user object. A third multimedia resource already browsed by the candidate user object is recommended to the target user object. There may be one third multimedia resource, or a plurality of third multimedia resources.

In other words, if two user objects have a higher relational degree, the multimedia resources browsed by the two user objects may be recommended to each other.

For example, if the similarity between the representative vectors of the user a and the user b is higher than a similarity threshold, the multimedia resource already browsed by the user a may be recommended to the user b and the multimedia resource already browsed by the user b may be recommended to the user a.

In the present disclosure, by determining the candidate user object having the similarity with the representative vector of the target user object higher than the similarity threshold from the user objects based on the representative vector of the target user object and recommending the multimedia resource already browsed by the candidate user object to the target user object, the multimedia resources recommendation based on the representative vectors of the user objects can be realized.

In order to implement the above embodiments, the embodiments of the present disclosure further provide an apparatus for recommending multimedia resources. FIG. 8 is a block diagram illustrating an apparatus for recommending multimedia resources according to another exemplary embodiment.

As illustrated in FIG. 8, the apparatus 700 for recommending multimedia resources may include a generating module 710, a first determining module 720, a training module 730 and a recommending module 740.

The generating module 710 is configured to generate a relation graph based on first multimedia resources browsed by a plurality of user objects. A node in the relation graph corresponds to a user object or a first multimedia resource, and an edge in the relation graph indicates that a browsing behavior occurs between two nodes connected by the edge.

The first determining module 720 is configured to take two nodes between which a number of nodes in a path of the relation graph is less than a number threshold as a training sample.

The training module 730 is configured to use training samples to train a graph model, in order to enable the graph model to obtain a representative vector of each node in the training samples. The representative vectors of two nodes belonging to a same training sample are similar.

The recommending module 740 is configured to recommend multimedia resources based on vector similarities between the representative vectors of respective nodes of the plurality of user objects and/or the representative vectors of respective nodes of the first multimedia resources.

In some embodiments, the first determining module 720 includes a moving unit, an obtaining unit and a combining unit.

The moving unit is configured to move a sliding window in each path of the relation graph with a fixed step size. A length of the sliding window corresponds to the number threshold.

The obtaining unit is configured to obtain nodes within the sliding window once the sliding window moves by one fixed step size.

The combining unit is configured to combine a node in the center of the sliding window with remaining nodes within the sliding window, respectively, and to take each combination as one training sample.

In some embodiments, the training module 730 includes a first determining unit, a generating unit and an allocating unit.

The first determining unit is configured to determine a first sub-cluster running the graph model from a server cluster.

The generating unit is configured to generate a prediction task and a parameter adjustment task based on the training samples.

The allocating unit is configured to allocate the prediction task to be performed by the first sub-cluster. The prediction task is configured to predict the representative vectors of two nodes in the training samples by using the graph model, to obtain a probability that the two nodes belong to a same training sample and obtain a probability gradient based on the predicted representative vectors.

The allocating unit is further configured to allocate the parameter adjustment task to be performed by a second sub-cluster other than the first sub-cluster in the server cluster. The parameter tuning task is configured to adjust a model parameter of the graph model based on the probability gradient generated by the prediction task.

In some embodiments, the graph model includes a feature function and an aggregate function. The allocating unit includes a querying sub unit, a generating sub unit, an aggregating sub unit and a determining sub unit.

The querying sub unit is configured to query the relation graph based on the training samples to obtain a plurality of neighbor nodes of each node in the training samples.

The generating sub unit is configured to generate a feature vector of each neighbor node based on the feature function.

The aggregating sub unit is configured to aggregate the feature vectors of the plurality of neighbor nodes using the aggregate function to obtain the representative vector of each node.

The determining sub unit is configured to determine the probability that two nodes in the training samples belong to the same training sample based on the vector similarity between the representative vectors of the two nodes.

In some embodiments, the model parameter includes a parameter in the aggregate function and a parameter in the feature function.

In some embodiments, the querying sub unit is configured to: for each node in the training samples, query the relation graph and randomly select a fixed number of neighbor nodes.

In some embodiments, the apparatus further includes a second determining unit, configured to determine the plurality of user objects each conducting a browsing behavior monitored within a statistical time period and the first multimedia resources browsed by the plurality of user objects based on browsing behaviors monitored within the statistical time period.

In some embodiments, the recommending module 740 includes a first querying unit, a second determining unit and a first recommending unit.

The first querying unit is configured to query a target representative vector of a target multimedia resource browsed by a target user object.

The second determining unit is configured to determine a second multimedia resource from the first multimedia resources based on the target representative vector. A vector similarity between a representative vector of the second multimedia resource and the target representative vector is higher than a similarity threshold.

The first recommending unit is configured to recommend the second multimedia resource to the target user object.

In some embodiments, the recommending module 740 includes a second querying unit, a third determining unit and a second recommending unit.

The second querying unit is configured to query a representative vector of a target user object.

The third determining unit is configured to determine a second multimedia resource from the first multimedia resources based on the representative vector of the target user object. A vector similarity between a representative vector of the second multimedia resource and the representative vector of the target user object is higher than a similarity threshold.

The second recommending unit is configured to recommend the second multimedia resource to the target user object.

In some embodiments, the recommending module 740 includes a second querying unit, a fourth determining unit and a third recommending unit.

The second querying unit is configured to query a representative vector of a target user object.

The fourth determining unit is configured to determine a candidate user object from the plurality of user objects based on the representative vector of the target user object. A vector similarity between a representative vector of the candidate user object and the representative vector of the target user object is higher than a similarity threshold.

The third recommending unit is configured to recommend a multimedia resource browsed by the candidate user object to the target user object.

It should be noted that, the above description about the embodiments of the method for recommending multimedia resources is also applicable to the embodiments of the apparatus for recommending multimedia resources, which is not described herein.

With the apparatus for recommending multimedia resources according to embodiments of the present disclosure, by generating a relation graph based on first multimedia resources browsed by a plurality of user objects, taking two nodes between which a number of nodes in a path of the relation graph is less than a number threshold as a training sample, training a graph model to obtain a representative vector of each node in the training samples and recommending multimedia resources based on vector similarities between the representative vectors of respective nodes of the plurality of user objects and/or the representative vectors of respective nodes of the first multimedia resources, the nearby nodes in the same path of the relation graph are used as the training samples in the training of the graph model, such that the representative vector obtained by the graph model may indicate an interior relation of resources browsed by the same user, thus improving an accuracy of the representative vector of the node, and thereby improving an accuracy of resource recommendation based on the representative vectors.

In some embodiments, an electronic device and a readable computer program product is provided.

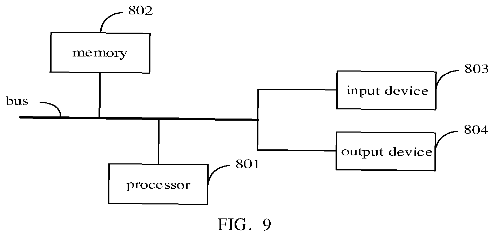

As illustrated in FIG. 9, a block diagram of an electronic device adapted to implement a method for recommending multimedia resources according to an exemplary embodiment is illustrated. The electronic device may refers to a digital computer in any form, such as a laptop, a desktop, a workbench, a personal digital assistant, a server, a blade server, a large-scale computer or any other suitable computer. The electronic device may also refer to a mobile device in any form, such as a personal digital assistant, a cell phone, a smart phone, a wearable device or any other computing device. The components, their connections and relationships and their functionalities described herein are merely examples, and should not be construed to limit the present disclosure.

As illustrated in FIG. 9, the electronic device includes one or more processors 801, a memory 802, and an interface configured to connect the components, including a high-speed interface and a low-speed interface. The components are coupled to each other with different buses, and can be installed on a common board or in other ways. The processor can process instructions executed in the electronic device, including the instructions stored in the memory or in a storage device and configured to display graphic information of a graphical user interface on an external input/output device (such as, a display device coupled to the interface). In other implementation, if needed, the multiple processors and/or multiple buses can be used along with multiple memories and storage devices. Multiple electronic devices can be connected, and each device provides some necessary operations (for example, as a server array, a group of blade servers, or a multi-processors system). In FIG. 9, take a processor 801 as an example.

The memory 802 may be a non-transitory computer-readable storage medium provided in the embodiments of the present disclosure. The memory may store instructions executable by at least one processor, which may cause the at least one processor to perform the method for recommending multimedia resources provided in the embodiments of the present disclosure. The non-transitory computer-readable storage medium may store computer instructions which may cause a computer to perform the method for recommending multimedia resources provided in the embodiments of the present disclosure.

The memory 802, as one kind of non-transitory computer-readable storage medium, can be used to store non-transitory software programs, non-transitory computer-executable programs and modules, such as the instructions/modules (for example, the generating module 710, the first determining module 720, the training module 730 and the recommending module 740 illustrated in FIG. 8) corresponding to the method for recommending multimedia resources provided in the embodiments of the present disclosure. The processor 801 executes various functional applications and data processing of the electronic device by running the non-transitory software programs and modules stored in the memory 802, so as to implement the method for recommending multimedia resources provided in the embodiments of the present disclosure.

The memory 802 may mainly include a program storage area and a data storage area. The program storage area may store an operating system, an application program required by at least one function and the like. The data storage area may store data created according to usage of the apparatus for recommending multimedia resources. Moreover, the memory 802 may include a high speed random access memory, and may also include a non-volatile memory, such as at least one magnetic disk storage device, flash memory device, or other volatile solid state storage device. In some embodiments, the memory 802 may include a remotely placed memory which is far wary from the processor 801. The remotely placed memory may be connected to the electronic device applicable to perform the method for recommending multimedia resources via network. The network may include, but is not limited to internet, intranet, local area network, mobile communication network, or a combination thereof.

The electronic device applicable to perform the method for recommending multimedia resources may further include an input device 803 and an output device 804. The processor 801, the memory 802, the input device 803 and the output device 804 may connected via the bus or in other ways. In FIG. 9, they are connected via the bus.

The input device 803 may be configured to receive inputted numeric or character information and to generate key signal inputs related to user settings and function controls of the electronic device. Specifically, the input device 803 may include a touch screen, a keyboard, a mouse, a track pad, a touch pad, an indicating lever, one or more mouse buttons, a track ball, a joystick or other input devices. The output device 804 may include a display device, an auxiliary lighting device (such as LED), a tactile feedback device (such as a vibration motor) or the like. The display device includes, but is not limited to, a liquid crystal display, a light-emitting diode display and a plasma display. In some embodiments, the display device may be a display screen.

The above described system and technology may be implemented in a fundamental digital circuit system, an integrated circuit system, an application-specific integrated circuit, computer hardware, firmware, software or a combination thereof. The implementations may include, an implementation in one or more computer programs, the one or more computer programs may be executed in a programmable system including at least one programmable processor. The programmable processor may be a dedicated or general-purpose programmable processor, which may receive data and instructions from a storage system, at least one input device and at least one output device, and transmit data and instructions to the storage system, the at least one input device and the at least one output device.

The computer programs (which may be referred to as program, software, software application or code) may include machine instructions of the programmable processor, and can be implemented by high-level procedural programming languages and/or object-oriented programming languages, and/or assembly/machine languages. As used herein, the term "machine-readable medium" and "computer-readable medium" refers to any computer program product, device, and/or apparatus (for example, disc, optical disc, memory, programmable logical device) configured to provide machine instructions and/or data to the programmable processor, including the machine-readable medium receiving the machine instructions configured as machine-readable signals. The term "machine-readable signal" refers to any signal configured to provide the machine instructions and/or data to the programmable processor.

In order to provide interaction with users, the system and technology described herein may be implemented on a computer. The computer includes: a display device (such as cathode-ray tube, or liquid crystal display monitor) configured to display information to the user, a keyboard and pointing device (such as mouse, or track ball) used by the user to provide input to the computer. Other kinds of devices may further provide interaction with the user, for example, providing sensing feedback (such as visual feedback, auditory feedback or tactile feedback) in any form to the user, and may receive input from the user in any form (including sound input, speech input or tactile input).

The above described system and technology may be implemented in a computing system (for example, as a data server) including background components, or a computing system (for example, an application server) including middleware components, or a computing system (for example, a user computer having a graphical user interface or a web browser, the user may interact with the system or technology via he graphical user interface or the web browser) including front end components, or a computing system including any combination of the background components, the middleware components and the front end components. The components may be coupled to each other via digital data communication (such as communication network) in any form or medium. The communication network includes a local area network, a wide area network or the internet.

The computing system may include a client and a server. The client and the server generally are arranged far away from each other and communicate with each other via the communication network. A relation between the client and the server may be generated through the computer program running on a computer and having the relation between the client and the server.

According to the technology solution in the embodiments of the present disclosure, in the training of the graph model, the nearby nodes in the same path of the relation graph are used as the training samples, such that the representative vector obtained by the graph model may indicate an interior relation of resources browsed by the same user, thus improving an accuracy of the representative vector of the node, and thereby improving an accuracy of resource recommendation based on the representative vectors.

In addition, terms such as "first" and "second" are used herein for purposes of description and are not intended to indicate or imply relative importance or significance or to imply the number of indicated technical features. Thus, the feature defined with "first" and "second" may comprise one or more of this feature. In the description of the present invention, "a plurality of' means two or more than two, unless specified otherwise.

Although explanatory embodiments have been shown and described, it would be appreciated by those skilled in the art that the above embodiments cannot be construed to limit the present disclosure, and changes, alternatives, and modifications can be made in the embodiments without departing from spirit, principles and scope of the present disclosure.

## Claims

1. A method for recommending multimedia resources, comprising:
generating (101) a relation graph based on first multimedia resources browsed by a plurality of user objects, wherein a node in the relation graph corresponds to a user object or a first multimedia resource, and an edge in the relation graph indicates that a browsing behavior occurs between two nodes connected by the edge;
taking (102) two nodes between which a number of nodes in a path of the relation graph is less than a number threshold as a training sample;
using (103) training samples to train a graph model, in order to enable the graph model to obtain a representative vector of each node in the training samples, wherein the representative vectors of two nodes belonging to a same training sample are similar; and
recommending (104) multimedia resources based on vector similarities between the representative vectors of respective nodes of the plurality of user objects and/or the representative vectors of respective nodes of the first multimedia resources.

2. The method of claim 1, wherein taking (102) two nodes between which the number of nodes is less than the number threshold in a path of the relation graph as the training sample comprises:
for each path of the relation graph, moving (301) a sliding window in the path with a fixed step size, wherein a length of the sliding window corresponds to the number threshold;
obtaining (302) nodes within the sliding window once the sliding window moves by one fixed step size; and
combining (303) a node in the center of the sliding window with remaining nodes within the sliding window, respectively, and taking each combination as one training sample.

3. The method of claim 1, wherein, using (103) the training samples to train the graph model, in order to enable the graph model to obtain the representative vector of each node in the training samples comprises:
determining (401) a first sub-cluster running the graph model from a server cluster;
generating (402) a prediction task and a parameter adjustment task based on the training samples;
allocating (403) the prediction task to be performed by the first sub-cluster, wherein the prediction task is configured to predict the representative vectors of two nodes in the training samples by using the graph model, to obtain a probability that the two nodes belong to a same training sample and obtain a probability gradient based on the predicted representative vectors; and
allocating (404) the parameter adjustment task to be performed by a second sub-cluster other than the first sub-cluster in the server cluster, wherein the parameter adjustment task is configured to adjust a model parameter of the graph model based on the probability gradient generated by the prediction task.

4. The method of claim 3, wherein graph model comprises a feature function and an aggregate function, wherein the prediction task is performed by operations:
querying (501) the relation graph based on the training samples to obtain a plurality of neighbor nodes of each node in the training samples;
generating (502) a feature vector of each neighbor node based on the feature function;
aggregating (503) the feature vectors of the plurality of neighbor nodes using the aggregate function to obtain the representative vector of each node; and
determining (504) the probability that two nodes in the training samples belong to the same training sample based on the vector similarity between the representative vectors of the two nodes.

5. The method of claim 4, wherein the model parameter comprises a parameter in the aggregate function and a parameter in the feature function.

6. The method of claim 4, wherein, querying (501) the relation graph based on the training samples to obtain a plurality of neighbor nodes of each node in the training samples comprises:
for each node in the training samples, querying the relation graph and randomly selecting a fixed number of neighbor nodes.

7. The method based on any one of claims 1-6, further comprising:
determining the plurality of user objects each conducting a browsing behavior monitored within a statistical time period and the first multimedia resources browsed by the plurality of user objects based on browsing behaviors monitored within the statistical time period.

8. The method of any one of claims 1-6, wherein, recommending (104) multimedia resources based on vector similarities between the representative vectors of respective nodes of the plurality of user objects and/or the representative vectors of respective nodes of the first multimedia resources comprises:
obtaining a target representative vector of a target multimedia resource browsed by a target user object;
determining a second multimedia resource from the first multimedia resources based on the target representative vector, wherein a vector similarity between a representative vector of the second multimedia resource and the target representative vector is higher than a similarity threshold; and
recommending the second multimedia resource to the target user object.

9. The method of any one of claims 1-6, wherein, recommending (104) multimedia resources based on vector similarities between the representative vectors of respective nodes of the plurality of user objects and/or the representative vectors of respective nodes of the first multimedia resources comprises:
obtaining a representative vector of a target user object;
determining a second multimedia resource from the first multimedia resources based on the representative vector of the target user object, wherein, a vector similarity between a representative vector of the second multimedia resource and the representative vector of the target user object is higher than a similarity threshold; and
recommending the second multimedia resource to the target user object.

10. The method of any one of claims 1-6, wherein recommending (104) multimedia resources based on vector similarities between the representative vectors of respective nodes of the plurality of user objects and/or the representative vectors of respective nodes of the first multimedia resources comprises:
obtaining a representative vector of a target user object;
determining a candidate user object from the plurality of user objects based on the representative vector of the target user object, wherein a vector similarity between a representative vector of the candidate user object and the representative vector of the target user object is higher than a similarity threshold; and
recommending a multimedia resource browsed by the candidate user object to the target user object.

11. An apparatus (700) for recommending multimedia resources, comprising:
a generating module (710), configured to generate a relation graph based on first multimedia resources browsed by a plurality of user objects, wherein a node in the relation graph corresponds to a user object or a first multimedia resource, and an edge in the relation graph indicates that a browsing behavior occurs between two nodes connected by the edge;
a first determining module (720), configured to take two nodes between which a number of nodes in a path of the relation graph is less than a number threshold as a training sample;
a training module (730), configured to use training samples to train a graph model, in order to enable the graph model to obtain a representative vector of each node in the training samples, wherein the representative vectors of two nodes belonging to a same training sample are similar;
a recommending module (740), configured to recommend multimedia resources based on vector similarities between the representative vectors of respective nodes of the plurality of user objects and/or the representative vectors of respective nodes of the first multimedia resources.

12. The apparatus (700) of claim 11, wherein the first determining module (720) comprises:
a moving unit, configured to move a sliding window in each path of the relation graph with a fixed step size, wherein a length of the sliding window corresponds to the number threshold;
an obtaining unit, configured to obtain nodes within the sliding window once the sliding window moves by one fixed step size;
a combining unit, configured to combine a node in the center of the sliding window with remaining nodes within the sliding window, respectively, and to take each combination as one training sample.

13. An electronic device, comprises:
at least one processor; and
a memory communicatively connected with the at least one processor; wherein,
the memory stores instructions executable by the at least one processor, and when the instructions are executed by the at least one processor, the at least one processor is caused to execute the method for recommending multimedia resources of any one of claims 1-10.

14. A non-transitory computer-readable storage medium storing computer instructions, wherein the computer instructions are configured to cause a computer to execute the method for recommending multimedia resources of any one of claims 1-10.

15. A computer program product storing computer programs, wherein the computer instructions are configured to cause a computer to execute the method for recommending multimedia resources of any one of claims 1-10.
